# FASCICULE DE BREVET EUROPEEN

(11) **EP 3 312 226 B1**
(45) Date de publication et mention de la délivrance du brevet: **18.02.2026**
(21) Numéro de dépôt: 17197324.1
(22) Date de dépôt: 19.10.2017
(51) Int. Cl.: C08K 3/04, H02G 15/06, H02G 15/064

(54) **MATÉRIAU DE RÉPARTITION DE CHAMP ÉLECTRIQUE, SON PROCÉDÉ DE FABRICATION ET DISPOSITIF COMPRENANT UN TEL MATÉRIAU**
MATERIAL ZUR VERTEILUNG EINES ELEKTRISCHEN FELDS, SEIN HERSTELLUNGSVERFAHREN UND VORRICHTUNG, DIE EIN SOLCHES MATERIAL UMFASST
MATERIAL FOR DISTRIBUTING AN ELECTRICAL FIELD, METHOD FOR MANUFACTURING SAME, AND DEVICE COMPRISING SUCH A MATERIAL

(30) Priorité: 19.10.2016 FR 1660153
(43) Date de publication de la demande: 25.04.2018
(73) Titulaire: Schneider Electric Industries SAS, 92500 Rueil-Malmaison (FR)
(72) Inventeur: HASSANZADEH, Mehrdad, 38050 GRENOBLE Cedex 9 (FR); METZ, Renaud, 34095 MONTPELLIER Cedex 5 (FR)
(74) Mandataire: Santarelli

(56) Documents cités:
- FR-A1- 2 980 622
- US-A1- 2016 376 487
- DATABASE WPI Week 201154, Derwent World Patents Index; AN 2011-H52618, XP002775911
- DATABASE WPI Week 201425, Derwent World Patents Index; AN 2013-V00988, XP002771743
- DATABASE WPI Week 201410, Derwent World Patents Index; AN 2014-B87232, XP002771741
- LIN ET AL: "Nonlinear DC conduction behavior in epoxy resin/graphite nanosheets composites", PHYSICA B: CONDENSED MATTER, ELSEVIER, AMSTERDAM, NL, vol. 400, no. 1-2, 11 October 2007 (2007-10-11), pages 229 - 236, XP022294380, ISSN: 0921-4526, DOI: 10.1016/J.PHYSB.2007.07.015
- CHEN GUOHUA ET AL: "Nonlinear Conduction in Nylon-6/Foliated Graphite Nanocomposites above Percolation Threshold", JOURNAL OF POLYMER SCIENCE, PART B: POLYMER PHYSICS, vol. 42, 1 January 2004 (2004-01-01), XP093266701
- CHEN GUOHUA ET AL: "Preparation and characterization of graphite nanosheets from ultrasonic powdering technique", CARBON, no. 42, 1 January 2004 (2004-01-01), pages 753 - 759, XP093310932

## Description

### DOMAINE TECHNIQUE

La présente invention se rapporte à l'utilisation d'une formulation comprenant une matrice polymérique et au moins une charge particulière, cette charge étant dispersée dans la matrice polymérique, pour la fabrication d'un matériau de répartition de champ électrique.

### ÉTAT DE LA TECHNIQUE ANTÉRIEURE

La demande croissante en énergie que l'on observe au niveau mondial constitue un défi technique pour les systèmes de production, de transport et/ou de distribution de l'électricité.

En particulier, de tels systèmes doivent pouvoir répondre à des attentes antagonistes et, par exemple, permettre d'élever les niveaux de tension tout en présentant une configuration la plus compacte possible.

Ces deux attentes ont une incidence directe sur les contraintes électriques qui s'exercent sur les pièces d'isolation électrique de ces systèmes de production, de transport et/ou de distribution de l'électricité.

La principale cause de dégradation de ces pièces diélectriques provient d'une répartition inhomogène des contraintes électriques au sein de ces pièces, en particulier dans les zones où apparaissent des effets de pointe et de points triples. Ce problème de répartition inhomogène des contraintes électriques, qui se rencontre avec les systèmes mentionnés ci-dessus, se rencontre également dans de nombreux autres dispositifs, tels que les dispositifs électriques, les composants électroniques de puissance ou encore les composants électrotechniques.

Pour pallier ce problème, on peut réaliser les pièces d'isolation électrique en matériaux diélectriques caractérisés par une conductivité, ou résistance, électrique non-linéaire. Ce faisant, on améliore non seulement l'homogénéisation de la répartition des contraintes électriques, mais cela permet également de résister aux surtensions temporaires, qu'elles se produisent en courant continu ou en courant alternatif.

De tels matériaux diélectriques peuvent notamment être des matériaux composites obtenus à partir de formulations formées par l'incorporation de charges présentant une résistance non linéaire dans une matrice polymérique, typiquement en élastomère ou formée à partir de résine époxyde. En formant un réseau au sein de la matrice polymérique, ces charges à résistance non linéaire créent un matériau caractérisé par une conductivité, ou résistance, électrique intensité-tension, notée I(U), non-linéaire, c'est-à-dire qui ne suit pas la loi d'Ohm. Ces matériaux diélectriques sont connus sous les appellations de "matériaux de répartition de champ électrique", "matériaux répartiteurs de potentiel", "matériaux gradateurs de potentiel" ou encore "matériaux à gradient de permittivité". Ce sont les expressions de "matériau(x) diélectrique(s)" et de "matériau(x) de répartition de champ électrique" qui seront indifféremment utilisées dans la suite de la présente description.

Les charges à résistance non linéaire, qui sont donc des charges qui confèrent une résistance électrique non linéaire au matériau qui les contient, sont typiquement choisies parmi des particules céramiques semi-conductrices, telles que du carbure de silicium SiC ou encore de l'oxyde de zinc ZnO.

Dans la suite de la présente demande, ces charges qui confèrent au matériau qui les contient une résistance électrique non linéaire seront également appelées charges à résistance non linéaire.

Toutefois, pour atteindre le seuil de percolation et, partant, la caractéristique électrique I(U) non-linéaire recherchée, la proportion volumique de ces charges, dans le matériau diélectrique, doit être de l'ordre de 30 % en vol.

On rappelle que le seuil de percolation correspond à un processus physique qui décrit, pour un système donné, une transition d'un état physique à un autre de ce système. Dans le cas présent, en fonction de la proportion volumique croissante de charges, le matériau diélectrique présente, une fois le seuil de percolation franchi, une résistance bien inférieure à celle qu'il présentait avant d'avoir atteint ce seuil.

Or, compte tenu de cette proportion volumique de charges particulièrement élevée, ces matériaux diélectriques sont non seulement relativement denses, mais ils présentent également de médiocres propriétés mécaniques. Ils ont, de surcroît, tendance à surchauffer lors de la mise en œuvre de champs électriques élevés.

Pour remédier à ces inconvénients liés à la proportion volumique importante des particules semi-conductrices dans le matériau à répartition de champ électrique, il a été proposé de mettre en œuvre des mélanges de plusieurs charges conférant audit matériau une résistance électrique non linéaire.

Ainsi, le document JP 2014-13786 A, référencé **[1]**, décrit un matériau de répartition de champ obtenu à partir d'une formulation comprenant une résine époxyde et trois types de charges (A), (B) et (C). La charge (A) conférant une résistance électrique non linéaire est composée de particules d'un corps fritté comprenant de l'oxyde de zinc ZnO comme composant principal, les autres composants pouvant être des oxydes métalliques tels que Bi₂O₃, Co₂O₃, MnO, Sb₂O₃ ou encore NiO. La charge (B) comprend des particules d'un matériau ayant une résistivité volumique comprise entre 10⁻⁵ Ω.cm et 10⁵ Ω.cm à 25 °C. Ces charges (B) peuvent être choisies parmi l'oxyde de fer, les particules de carbone et les fibres de carbone. La charge (C) comprend un composé stratifié, par exemple du talc ou de la smectite, et/ou un composé aciculaire, tel que de la wollastonite. Le matériau décrit par le document **[1]** comprend de 10 à 90 parties en poids de charge (A), de 10 à 50 parties en poids de charges (B) et de 10 à 60 parties en poids de charge (C) pour 100 parties en poids de résine époxyde.

Le document WO 2008/076058 A1, référencé **[2],** décrit un matériau de répartition de champ électrique comprenant une matrice polymérique et, comme charge conférant audit matériau une résistance électrique non linéaire, de l'oxyde de zinc ZnO sous forme de particules ayant au moins une dimension, parmi la largeur, la longueur et/ou l'épaisseur, qui est inférieure ou égale à 100 nm en mélange avec du noir de carbone. Dans le matériau diélectrique, la proportion volumique des particules d'oxyde de zinc est inférieure à 40 % vol, voire inférieure à 30 % vol, tandis que la proportion volumique de noir de carbone est variable et fonction de la taille moyenne de particules de noir de carbone. Ainsi, lorsque la taille moyenne de particules de noir de carbone est comprise entre 1 nm et 100 nm, la proportion volumique de noir de carbone est comprise entre 0,2 % vol et 10 % vol et, plus préférentiellement, entre 1 % vol et 3 % vol. Lorsque la taille moyenne de particules de noir de carbone est comprise entre 40 nm et 500 nm, la proportion volumique de noir de carbone est comprise entre 5 % vol et 40 % vol et, plus préférentiellement, entre 10% vol et 15% vol. Le document **[2]** précise que la proposition volumique de noir de carbone est adaptée en fonction de la résistivité recherchée pour le matériau de répartition de champ électrique.

Le document CN 103 259 239 A, référencé **[3],** décrit un matériau de répartition de champ électrique à base de silicone haute performance ou d'élastomère d'éthylène-propylène-diène (EPDM) comprenant différents types de charges et, notamment, de 10 à 20 parties en poids de charges dites "charges à fonction non linéaire" pour 100 parties en poids de silicone ou d'EPDM. Ces charges à fonction non linéaire décrites par le document **[3],** qui confèrent au matériau une résistance électrique non linéaire, sont formées par un mélange d'oxyde de zinc ZnO, de dioxyde de titane TiO₂, de carbure de silicium SiC, de nanotubes de carbone, de particules de noir de carbone conducteur et de graphite. À l'exception des nanotubes de carbone et du graphite, ces charges présentent toutes une taille de particules comprise entre 10 nm et 100 nm. Les nanotubes de carbone, qui peuvent être monofeuillets, double-feuillets ou encore multifeuillets, ont un diamètre compris entre 5 nm et 80 nm et une longueur de tube comprise entre 1 µm et 15 µm. Quant au graphite, celui-ci se présente sous la forme de lamelle de 10 nm à 100 nm d'épaisseur et de 1 µm à 2 µm de diamètre.

En recourant à un mélange de plusieurs charges, les matériaux de répartition de champ électrique décrits par les documents **[1]** à **[3]** sont de mise en œuvre industrielle plus difficile que celle d'un matériau similaire obtenu à partir d'une formulation ne comprenant qu'un seul type de charges.

Le document WO 2013/033603 A1, référencé **[4],** décrit un matériau de répartition de champ électrique comprenant une matrice d'au moins un polymère dans laquelle sont dispersées une ou plusieurs charges particulières conférant audit matériau une résistance électrique non linéaire. Cette charge particulière peut être choisie parmi un oxyde de graphène réduit, un oxyde de graphène non réduit et le mélange d'un oxyde de graphène réduit et d'un oxyde de graphène non réduit.

Lorsque cette charge n'est constituée que par un oxyde de graphène réduit, celle-ci est présente en une proportion comprise entre 2 parties et 10 parties pour 100 parties de polymère. Un tel oxyde de graphène réduit est, par exemple, obtenu par un traitement thermique consistant à soumettre l'oxyde de graphène à une température comprise entre 70 °C et 160 °C.

Toutefois, même si la proportion de charge, dans le matériau diélectrique décrit par le document **[4],** est quelque peu réduite par rapport à celle présente dans le matériau diélectrique décrit par les documents **[1]** et **[3],** il n'en reste pas moins que le coût associé à la fabrication d'un tel matériau de répartition de champ électrique est encore relativement élevé, en raison du coût lui-même élevé de l'oxyde de graphène.

De surcroît, la fabrication d'un matériau diélectrique tel qu'enseigné par le document **[4]** implique la mise en œuvre d'une ou de plusieurs étapes préalables à l'étape proprement dite de mélange de la ou des charges dans la matrice polymérique. En effet, n'étant commercialement disponible que sous forme de suspension, l'oxyde de graphène doit au préalable être soumis à une étape de lyophilisation pour être incorporé sous forme de poudre dans la matrice polymérique.

L'étape de lyophilisation peut, le cas échéant, être suivie par une étape de réduction de l'oxyde de graphène, dans le cas où la charge mise en œuvre est de l'oxyde de graphène réduit.

En outre, on observe que les particules d'oxyde de graphène, réduit ou non, ont tendance à s'agglomérer ou à s'enrouler, ce qui est préjudiciable à une bonne dispersion de ces particules dans la matrice polymérique.

La publication "Nonlinear DC conduction behaviour in epoxy resin/graphite nanosheets composites" de Lin et al. (Physics B 400 (2007) pages 229-236) se rapporte à une étude du comportement de conduction électrique non linéaire de matériaux composites obtenus à partir de résine époxy et de graphite lamellaire.

Le but de l'invention est, par conséquent, de pallier les inconvénients de l'art antérieur, et notamment des documents **[1]** à **[4],** et de proposer un matériau de répartition de champ électrique, du type matériau composite, présentant une conductivité, ou résistance, électrique non-linéaire qui soit au moins comparable à celle des matériaux composites de l'art antérieur, mais qui présente également un coût modéré, de bonnes propriétés mécaniques, une densité réduite et qui ne surchauffe pas lors de la mise en œuvre de champs électriques élevés.

Un autre but de l'invention est de proposer un procédé de fabrication d'un tel matériau qui soit de mise en œuvre particulièrement aisée, en permettant notamment la fabrication d'un matériau diélectrique performant qui peut avantageusement ne comprendre qu'un seul type de charge, contrairement à l'enseignement des documents **[1]** à **[3]** et ce, en un nombre d'étapes réduit par rapport à celui du procédé de fabrication du matériau diélectrique décrit par le document **[4].**

De manière plus générale, le procédé de fabrication selon l'invention doit être le plus direct possible et permettre une mise en œuvre industrielle qui soit techniquement et économiquement optimisée.

C'est donc dans un souci constant d'amélioration des propriétés intrinsèques de ces matériaux de répartition de champ électrique et des procédés de fabrication associés qu'est basée la présente invention.

### EXPOSÉ DE L'INVENTION

Ces buts ainsi que d'autres encore sont atteints par l'utilisation selon la revendication 1 et l'utilisation selon la revendication 13.

Selon l'invention, la charge ou le mélange de charges est dispersé(e) de manière homogène dans la matrice polymérique et la formulation comprend du graphite lamellaire en tant que charge unique ou en tant que charge majoritaire en volume dudit mélange.

Dans ce qui précède et dans ce qui suit :
- par *"charge",* on entend une substance particulaire inorganique qui, ajoutée à un polymère, permet de modifier de manière sensible tout ou partie des propriétés du matériau obtenu à partir de ce polymère, par exemple ses propriétés mécaniques, électriques et/ou thermiques ;
- par *"graphite lamellaire",* on entend un agencement polycristallin de carbone constitué par un empilement de feuillets de graphène, un feuillet de graphène étant un cristal de carbone bidimensionnel présentant une structure en nid d'abeille. Des liaisons covalentes lient les atomes de carbone dans un même plan tandis que s'exercent des liaisons van der Waals entre deux feuillets de graphène adjacents, ces feuillets étant séparés d'environ 0,336 nm ; et
- par "majoritaire", on entend que le graphite lamellaire représente la charge dont la proportion volumique, dans le mélange de charges conférant audit matériau une résistance électrique non linéaire, est strictement supérieure à la proportion volumique de chaque autre charge formant ce mélange.

Grâce à ce choix de graphite lamellaire distribué de manière homogène dans la matrice polymérique, on obtient, de manière inattendue et surprenante, un matériau composite diélectrique qui présente une conductivité, ou résistance, électrique non-linéaire, pour le moins comparable à celle des matériaux de répartition de champ électrique de l'art antérieur et ce, pour un coût bien moins élevé. En effet, en plus d'être nettement moins cher que l'oxyde de graphène présent dans le matériau diélectrique décrit par le document **[4],** le graphite lamellaire est également disponible à l'échelle industrielle, ce qui n'est pas le cas de l'oxyde de graphène.

Comme indiqué précédemment, la formulation comprend une ou plusieurs charges conférant audit matériau une résistance électrique non linéaire dispersées dans la matrice polymérique. En d'autres termes, cette formulation peut ne comprendre qu'une seule charge, au sens d'un seul type de charge, cette seule charge étant une charge conférant audit matériau une résistance électrique non linéaire et étant alors le graphite lamellaire.

Mais la formulation peut également comprendre un mélange de charges conférant audit matériau une résistance électrique non linéaire, c'est-à-dire comprendre un mélange de deux, trois, voire plus, charges distinctes, chacune de ces charges conférant audit matériau une résistance électrique non linéaire, dont le graphite lamellaire. Dans cette hypothèse, le graphite lamellaire correspond à la charge dont la proportion volumique est majoritaire par rapport à la proportion volumique de chacune des charges formant ce mélange.

La ou les charges du mélange autres que le graphite lamellaire peuvent être choisies parmi les charges à résistance non linéaire qui sont décrites dans les documents **[1]** à **[4].**

Cette ou ces autres charges du mélange peuvent notamment être choisies parmi l'oxyde de zinc ZnO, le dioxyde de titane TiO₂, le carbure de silicium SiC et le dioxyde d'étain SnO₂.

Dans une variante de l'invention, la formulation à partir de laquelle est obtenu le matériau de répartition de champ électrique peut comprendre, en outre, une ou plusieurs charges autres que la ou les charges du mélange, c'est-à-dire une ou plusieurs charges qui ne confèrent pas de résistance électrique non linéaire au matériau de répartition de champ électrique selon l'invention.

Cette ou ces charges qui ne se caractérisent pas par une résistance non linéaire, c'est-à-dire qui se caractérisent par une résistance linéaire, peuvent être choisies parmi le dioxyde de silicium SiO₂, des oxydes métalliques tels que l'oxyde d'argent AgO ou le trioxyde d'aluminium Al₂O₃, et des charges carbonées électriquement conductrices telles que des nanotubes de carbones, des noirs de carbone ou encore des fullerènes.

Dans une variante particulièrement avantageuse de l'invention, la formulation à partir de laquelle est obtenu le matériau de répartition de champ électrique est constituée par la matrice polymérique et le graphite lamellaire dispersé dans la matrice polymérique, la dispersion de ce graphite lamellaire dans la matrice polymérique étant homogène.

Ainsi, en faisant le choix de n'incorporer qu'un seul type de charge, le matériau de répartition de champ électrique est de mise en œuvre industrielle aisée, en particulier plus aisée que celle des matériaux de répartition de champ électrique décrits par les documents **[1]** à **[3]**.

Dans un mode de réalisation du matériau diélectrique que la formulation ne comprenne que du graphite lamellaire ou bien qu'elle comprenne du graphite lamellaire en présence d'une ou plusieurs autres charges, que ces charges soient, ou non, à résistance non linéaire, le graphite lamellaire se présente sous la forme de particules formées par un empilement d'au moins dix feuillets de graphène.

À partir d'un tel empilement comprenant environ dix feuillets de graphène, les particules de graphite lamellaire présentent des interactions latérales entre feuillet, ce qui les distingue très nettement de la structure bidimensionnelle présentée par un mono-feuillet de graphène.

En faisant le choix de telles particules, on limite les phénomènes d'agglomération ou d'enroulement des charges dans la matrice polymérique que l'on peut observer avec les particules d'oxyde de graphène, réduit ou non, présentes dans le matériau diélectrique décrit par le document **[4]**.

Dans une variante avantageuse de l'invention, l'épaisseur des particules de graphite lamellaire est comprise entre 1 nm et 500 nm, avantageusement entre 1 nm et 100 nm et, de préférence, entre 1 nm et 20 nm.

Le graphite lamellaire présente une surface spécifique, mesurée selon la méthode BET, supérieure ou égale à 300 m²/g, avantageusement comprise entre 300 m²/g et 1000 m²/g et, de préférence, comprise entre 500 m²/g et 800 m²/g.

La proportion volumique de graphite lamellaire, dans la formulation à partir de laquelle est obtenu le matériau de répartition de champ électrique est inférieure ou égale à 5 % vol.

Dans une version avantageuse de l'invention, la proportion volumique de graphite lamellaire, dans la formulation, est comprise entre 0,1% vol et 5 % vol, plus avantageusement entre 0,5 % vol et 4 % vol et, préférentiellement, entre 1 % vol et 3 % vol.

De nombreux polymères peuvent être envisagés pour la matrice polymérique de la formulation à partir de laquelle est obtenu le matériau de répartition de champ électrique.

Cette matrice polymérique peut notamment comprendre au moins un polymère choisi dans le groupe constitué par un polymère thermodurcissable, un polymère thermoplastique et un élastomère, ce polymère pouvant être seul ou en mélange sous la forme d'un alliage.

Dans une première variante de l'invention, lorsque le polymère de la matrice polymérique est un polymère thermodurcissable, ce polymère peut être choisi dans le groupe constitué par les polyépoxydes, les polyesters insaturés et les polyuréthanes.

Dans cette première variante, le polymère thermodurcissable est avantageusement un polyépoxyde obtenu par réaction d'une résine époxyde, telle que la résine de diglycidyléther du bisphénol A (notée DGEBA), avec un durcisseur, par exemple l'anhydride méthyltétrahydrophtalique (MTHPA).

Dans une deuxième variante de l'invention, lorsque le polymère de la matrice polymérique est un élastomère, ce dernier peut être choisi dans le groupe constitué par les caoutchoucs naturels, les silicones, les copolymères éthylène-propylène (EPR) et les terpolymères éthylène-propylène-diène (EPDM).

Dans cette deuxième variante, l'élastomère est avantageusement un silicone, par exemple un poly(diméthylsiloxane) (PDMS).

Dans une troisième variante de l'invention, lorsque le polymère de la matrice polymérique est un polymère thermoplastique, ce polymère peut être choisi dans le groupe constitué par les polyesters linéaires, les polyamides (PA), les polycarbonates (PC), les copolymères éthylène-acétate de vinyle (EVA), les polyacétals et les polyimides parmi lesquels les polyétherimide (PEI) et polyamide-imide (PAI).

La présente divulgation se rapporte également à un procédé de fabrication d'un matériau de répartition de champ électrique.

Ce procédé comprend, successivement et dans cet ordre, les étapes (a) à (c) suivantes :
(a) une incorporation, dans une matrice polymérique, d'une charge ou d'un mélange de charges conférant audit matériau une résistance électrique non linéaire, dont du graphite lamellaire, moyennant quoi on obtient une formulation comprenant du graphite lamellaire en tant que charge unique ou en tant que charge majoritaire en volume dudit mélange, cette ou ces charges étant dispersées de manière homogène dans la matrice polymérique,
(b) une mise en forme de la formulation obtenue à l'issue de l'étape (a), et
(c) une application d'une énergie à la formulation mise en forme à l'étape (b), moyennant quoi on obtient le matériau de répartition de champ électrique.

Les caractéristiques décrites précédemment en liaison avec la formulation à partir de laquelle peut être fabriqué le matériau de répartition de champ électrique et, notamment, les caractéristiques relatives au graphite lamellaire, aux autres charges, que celles-ci soient ou non à résistance non linéaire, ainsi qu'aux polymères susceptibles d'être utilisés dans la matrice polymérique, sont bien entendu applicables au présent procédé de fabrication.

Le procédé de fabrication est donc de mise en œuvre particulièrement aisée, le graphite lamellaire et, le cas échéant, la ou les autres charges étant directement incorporées dans la matrice polymérique, en l'absence d'étapes de traitement préalable, du type lyophilisation et réduction, comme dans le cas du procédé décrit par le document **[4]**.

Toutefois, rien n'interdit d'envisager la mise en œuvre d'une étape de traitement préalable à l'étape (a), telle qu'une étape visant à homogénéiser le graphite lamellaire et, le cas échéant, la ou les autres charges, par exemple une étape de broyage.

L'étape (a) d'incorporation consiste à obtenir, par mélange et/ou malaxage, une formulation se caractérisant par une distribution de la ou des charges, dont le graphite lamellaire dans la matrice polymérique qui soit la plus homogène possible.

Selon une variante du procédé la matrice polymérique peut d'ores et déjà comprendre une ou plusieurs charges avant la mise en œuvre de l'étape (a) du procédé de fabrication.

L'étape (b) de mise en forme de la formulation doit être comprise comme comprenant le moulage ou le surmoulage de la formulation telle qu'issue de l'étape (a), la technique employée dépendant de la destination du matériau de répartition de champ électrique.

Dans une version avantageuse du procédé, l'énergie qui est appliquée lors de l'étape (c) peut être une énergie thermique, éventuellement combinée à des rayonnements ionisants, afin de permettre la polymérisation du ou des polymères de la formulation.

L'invention se rapporte également à des utilisations du matériau de répartition de champ électrique tel que décrit et défini ci-dessus, les caractéristiques avantageuses de ce matériau pouvant être prises seules ou en combinaison.

Le matériau de répartition de champ électrique peut être notamment utilisé pour un substrat de composant électronique ou pour l'encapsulation d'un tel composant électronique. Dans les deux cas, ce composant électronique peut être un composant de basse tension ou un composant de puissance.

Le matériau de répartition de champ électrique peut être également utilisé pour l'encapsulation de liaison de câbles ou de sortie de câbles. De tels câbles pouvant notamment équiper des dispositifs électriques de moyenne tension ou de haute tension, des composants de type connecteurs ainsi que des passages de transformateurs.

Le matériau de répartition de champ électrique peut encore être utilisé comme matériau diélectrique d'un dispositif électrique, un tel dispositif électrique pouvant, par exemple, être destiné à l'industrie aéronautique, à l'industrie automobile, à l'électronique, ou encore à l'industrie électrique, en particulier à l'industrie électrique moyenne ou haute tension.

Dans ce qui précède et/ou ce qui suit, les expressions "basse tension", "moyenne tension" et "haute tension" sont utilisées dans leurs acceptations habituelles, à savoir:
- l'expression "basse tension" désigne une tension qui est strictement inférieure à 1 kV en courant alternatif et à 1,5 kV en courant continu,
- l'expression "moyenne tension" désigne une tension qui est supérieure ou égale à 1 kV en courant alternatif et à 1,5 kV en courant continu mais inférieure ou égale à 52 kV en courant alternatif et à 75 kV en courant continu, et
- l'expression "haute tension" désigne une tension qui est strictement supérieure à 52 kV en courant alternatif et à 75 kV en courant continu.

Le matériau de répartition de champ électrique peut encore être utilisé comme varistance, en particulier comme varistance de cartes électroniques. Cette utilisation peut être aussi bien envisagée pour les cartes électroniques rigides à la place des varistances céramiques, que pour les cartes électroniques flexibles, auquel cas le matériau de répartition de champ électrique est obtenu à partir d'une formulation comprenant un polymère thermoplastique souple ou un élastomère.

La présente divulgation se rapporte également à un dispositif, notamment à un dispositif électrique.

Ce dispositif comprend, comme matériau diélectrique, un matériau de répartition de champ électrique tel que défini ci-dessus, les caractéristiques avantageuses de ce matériau pouvant être prises seules ou en combinaison.

Ce dispositif électrique peut notamment être un revêtement d'ampoule à vide pour disjoncteur, tel qu'un disjoncteur moyenne tension.

L'invention se rapporte également à l'utilisation de graphite lamellaire dans une matrice polymérique.

Selon l'invention, ce graphite lamellaire peut être utilisé en tant que charge unique dans une matrice polymérique pour la fabrication d'un matériau de répartition de champ électrique. En effet, à lui-seul, le graphite lamellaire confère audit matériau une résistance électrique non linéaire.

Ce graphite lamellaire peut également être utilisé dans une matrice polymérique en tant que charge majoritaire en volume d'un mélange de charges conférant audit matériau une résistance électrique non linéaire pour la fabrication d'un matériau de répartition de champ électrique.

Ce graphite lamellaire est avantageusement utilisé comme seule charge à résistance non linéaire. Mais rien n'interdit d'envisager son utilisation en mélange avec une ou plusieurs autres charges, que celles-ci soient, ou non, à résistance non linéaire sous réserve que la proportion volumique du graphite lamellaire soit strictement supérieure à la proportion volumique de chacune des autres charges conférant audit matériau une résistance électrique non linéaire.

Les caractéristiques décrites précédemment en liaison avec le graphite lamellaire, les autres charges, que celles-ci soient ou non à résistance non linéaire, et les polymères susceptibles d'être utilisés dans la matrice polymérique, sont bien entendu applicables à la présente utilisation.

D'autres caractéristiques et avantages de l'invention apparaîtront mieux à la lecture du complément de description qui suit, qui se rapporte à un exemple de réalisation d'un matériau de répartition de champ électrique conforme à l'invention ainsi qu'à l'évaluation de propriétés électriques de ce matériau.

### BRÈVE DESCRIPTION DES DESSINS

La figure 1 correspond à une copie d'écran provenant d'un oscilloscope et traduisant la courbe de caractéristique électrique intensité-tension du matériau de répartition de champ électrique avant franchissement de la tension de seuil.
La figure 2 correspond à une copie d'écran provenant d'un oscilloscope et traduisant la courbe de caractéristique électrique intensité-tension du matériau de répartition de champ électrique après franchissement de la tension de seuil.
La figure 3 illustre la courbe traduisant l'évolution de la densité de courant, notée J et exprimée en A/m², en fonction du champ appliqué, noté E et exprimé en V/m.

### EXPOSÉ DÉTAILLÉ DE MODES DE RÉALISATION PARTICULIERS

### Composés mis en œuvre

Le polymère mis en œuvre pour l'obtention du matériau de répartition de champ électrique selon l'invention est un polyépoxyde préparé à partir des composés suivants, dans les proportions massiques indiquées ci-dessous :
- 100 parties en poids d'une résine DGEBA commercialisée par la Société Huntsman sous la dénomination Araldite^{®} CY 225, et
- 80 parties en poids d'un durcisseur formé par un anhydride méthyltétrahydro-phtalique (MTHPA) commercialisé par la Société Huntsman sous la dénomination Aradur^{®} HY 925.

La charge mise en œuvre pour l'obtention du matériau de répartition de champ électrique selon l'invention est un graphite lamellaire disponible auprès de la société XG Sciences sous la référence commerciale xGnP^{®}C750 et qui présente une surface spécifique BET spécifiée de 750 m²/g. En l'espèce, la surface spécifique BET a été mesurée à 686 m²/g.

### Préparation de la formulation

Dans un bécher de taille adaptée à la pale d'une agitation mécanique, on introduit la résine DGEBA et le durcisseur MTHPA puis on procède à leur mélange, sous agitation mécanique, pendant 20 min et à une température de 60°C, ce mélange devenant alors plus fluide.

À la composition ainsi obtenue, on ajoute progressivement 2 % vol de graphite lamellaire, tout en agitant mécaniquement pendant 20 min à 60°C, de manière à obtenir une formulation homogène.

Cette formulation est alors coulée doucement dans l'empreinte de moules qui ont été préalablement chauffés pendant 30 min à une température de 100 °C.

Les moules comprenant la formulation sont placés pendant 20 min dans une étuve à une température de 60 °C et munie d'un piège à vide pour permettre le dégazage de la formulation, le vide étant maintenu à environ 133 Pa (1 torr).

### Obtention du matériau de répartition de champ électrique

Les moules sont ensuite placés dans une étuve programmable. La cuisson se fait en deux étapes : on réalise d'abord l'étape de gélification en maintenant les moules comprenant la formulation pendant 5 h à 100°C puis l'étape de durcissement en maintenant les moules et la formulation pendant 8 h à 140 °C.

Au terme de cette étape de durcissement, les moules sont sortis du four. Lorsque les moules sont revenus à température ambiante, on procède au démoulage des pièces moulées formées du matériau de répartition de champ électrique.

### Évaluation des propriétés électriques du matériau de répartition de champ électrique

Les pièces moulées de matériau de répartition de champ électrique sont ensuite découpées sous forme d'échantillons parallélépipédiques présentant les dimensions suivantes : 5 cm x 5 cm x 4 mm. Une telle épaisseur d'échantillons, largement supérieure au micromètre, permet d'obtenir une valeur de rigidité du matériau de répartition de champ électrique parfaitement représentative.

On procède ensuite à la mise en place, sur les échantillons, d'électrodes adhésives reliées à un équipement délivrant une tension de 50 Hz et un courant limité à 0,1 mA.

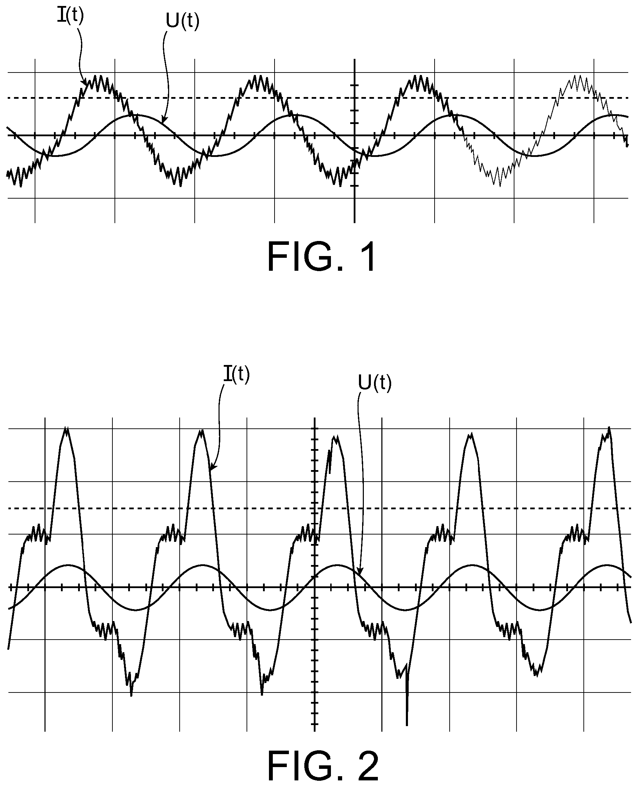

En référence à la figure 1 qui illustre la courbe de caractéristique électrique intensité-tension du matériau de répartition de champ électrique avant franchissement de la tension de seuil, on observe que le matériau selon l'invention présente des caractéristiques intensité-tension non linéaires. En particulier, la tension (notée U(t)) est en quadrature retard sur l'intensité (notée I(t)).

En référence à la figure 2 qui illustre la courbe de caractéristique électrique intensité-tension du matériau de répartition de champ électrique après franchissement de la tension de seuil, on note que l'impédance du matériau selon l'invention devient subitement résistive et qu'elle baisse de plusieurs ordres de grandeur.

Ce phénomène est réversible. Ainsi, lorsque la tension est abaissée, le matériau de répartition de champ électrique retrouve sa résistivité initiale et sa caractéristique électrique intensité-tension telle que représentée à la figure 1.

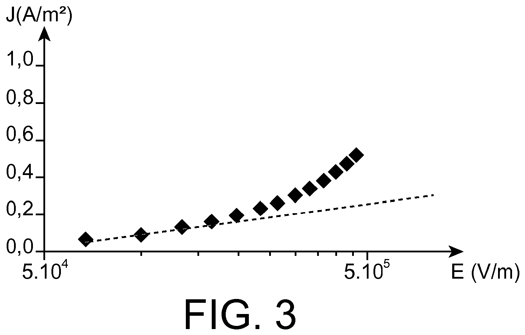

En référence à la figure 3 illustrant l'évolution de la densité de courant J en fonction du champ E appliqué, on constate que la densité de courant augmente de façon non linéaire avec le champ externe.

En effet, lorsqu'il est soumis à une différence de potentiel, le matériau de répartition de champ électrique selon l'invention présente une conductivité, ou résistance, qui n'évolue pas de façon linéaire. Ainsi, lorsque cette différence de potentiel dépasse une valeur de tension dite "tension de seuil", le courant augmente de façon importante pour une faible variation de la tension.

### BIBLIOGRAPHIE

**[1]** JP 2014-13786 A
**[2]** WO 2008/076058 A1
**[3]** CN 103 259 239 A
**[4]** WO 2013/033603 A1

## Revendications

1. Utilisation d'une formulation comprenant une matrice polymérique et une charge ou un mélange de charges conférant à un matériau une résistance électrique non linéaire, pour la fabrication d'un matériau de répartition de champ électrique, **caractérisée en ce que** cette charge ou ce mélange de charges est dispersé(e) de manière homogène dans la matrice polymérique et **en ce que** la formulation comprend du graphite lamellaire en tant que charge unique ou en tant que charge majoritaire en volume dudit mélange, le graphite lamellaire présentant une surface spécifique, mesurée selon la méthode BET, supérieure ou égale à 300 m²/g et la proportion volumique de graphite lamellaire, dans la formulation, étant inférieure ou égale à 5 % vol.

2. Utilisation selon la revendication 1, dans laquelle le graphite lamellaire se présente sous la forme de particules formées par un empilement d'au moins dix feuillets de graphène.

3. Utilisation selon la revendication 1 ou 2, dans laquelle le graphite lamellaire présente une surface spécifique, mesurée selon la méthode BET, comprise entre 300 m²/g et 1000 m²/g et, de préférence, comprise entre 500 m²/g et 800 m²/g,

4. Utilisation selon l'une quelconque des revendications 1 à 3, dans laquelle la proportion volumique de graphite lamellaire, dans la formulation, est comprise entre 0,5 % vol et 4 % vol et, préférentiellement, entre 1 % vol et 3 % vol.

5. Utilisation selon l'une quelconque des revendications 1 à 4, dans laquelle la ou les charges dudit mélange autres que le graphite lamellaire sont choisies parmi l'oxyde de zinc, le dioxyde de titane, le carbure de silicium et le dioxyde d'étain.

6. Utilisation selon l'une quelconque des revendications 1 à 5, dans laquelle la formulation comprend, en outre, une ou plusieurs charges autres que la ou les charges dudit mélange, par exemple du dioxyde de silicium, un oxyde métallique et/ou une charge carbonée électriquement conductrice.

7. Utilisation selon l'une quelconque des revendications 1 à 4, dans laquelle la formulation est constituée par la matrice polymérique et le graphite lamellaire.

8. Utilisation selon l'une quelconque des revendications 1 à 7, dans laquelle la matrice polymérique comprend au moins un polymère choisi dans le groupe constitué par un polymère thermodurcissable, un polymère thermoplastique et un élastomère.

9. Utilisation selon la revendication 8, dans laquelle le polymère thermodurcissable est choisi dans le groupe constitué par les polyépoxydes, les polyesters insaturés et les polyuréthanes.

10. Utilisation selon la revendication 8, dans laquelle l'élastomère est choisi dans le groupe constitué par constitué par les silicones, les copolymères éthylène-propylène et les terpolymères éthylène-propylène-diène et est, de préférence, un silicone.

11. Utilisation selon la revendication 8, dans laquelle le polymère thermoplastique est choisi dans le groupe constitué par les polyesters linéaires, les polyamides, les polycarbonates, les copolymères éthylène-acétate de vinyle, les polyacétals et les polyimides.

12. Utilisation selon l'une quelconque des revendications 1 à 11 pour un substrat de composant électronique, pour l'encapsulation d'un composant électronique, pour l'encapsulation de liaison ou de sortie de câbles, comme matériau diélectrique d'un dispositif électrique ou comme varistance.

13. Utilisation de graphite lamellaire présentant une surface spécifique, mesurée selon la méthode BET, supérieure ou égale à 300 m²/g en une proportion volumique inférieure ou égale à 5 % vol, en tant que charge unique ou en tant que charge majoritaire en volume d'un mélange de charges conférant à un matériau une résistance électrique non linéaire, dans une matrice polymérique pour la fabrication d'un matériau de répartition de champ électrique.

## Patentansprüche

1. Verwendung einer Formulierung, die eine polymere Matrix und eine Füllung oder ein Gemisch von Füllstoffen umfasst, die einem Material einen nichtlinearen elektrischen Widerstand verleihen, zur Herstellung eines Materials zur Verteilung des elektrischen Felds, **dadurch gekennzeichnet, dass** dieser Füllstoff oder dieses Gemisch von Füllstoffen homogen in der polymeren Matrix verteilt ist und dass die Formulierung Lamellengraphit als einzelner Füllstoff oder als volumenmäßig mehrheitlicher Füllstoff des Gemisches umfasst, wobei der Lamellengraphit eine spezifische, nach dem BET-Verfahren gemessene Oberfläche von 300 m²/g oder mehr aufweist und der Volumenanteil an Lamellengraphit in der Formulierung 5 Vol.-% oder weniger beträgt.

2. Verwendung nach Anspruch 1, wobei der Lamellengraphit die Form von Partikeln aufweist, die durch eine Stapelung von mindestens zehn Graphenblättern gebildet werden.

3. Verwendung nach Anspruch 1 oder 2, wobei der Lamellengraphit eine spezifische, nach dem BET-Verfahren gemessene Oberfläche zwischen 300 m²/g und 1000 m²/g und vorzugsweise zwischen 500 m²/g und 800 m²/g aufweist.

4. Verwendung nach einem der Ansprüche 1 bis 3, wobei der Volumenanteil von Lamellengraphit in der Formulierung zwischen 0,5 Vol.-% und 4 Vol.-% und vorzugsweise zwischen 1 Vol.-% und 3 Vol.-% beträgt.

5. Verwendung nach einem der Ansprüche 1 bis 4, wobei die Füllstoffe des Gemischs außer Lamellengraphit aus Zinkoxid, Titandioxid, Siliziumkarbid und Zinndioxid ausgewählt sind.

6. Verwendung nach einem der Ansprüche 1 bis 5, wobei die Formulierung ferner eine oder mehrere andere Füllstoffe als die Füllstoffe des Gemischs umfasst, beispielsweise Siliziumdioxid, ein Metalloxid und/oder eine elektrisch leitfähige Kohlenstofffüllung.

7. Verwendung nach einem der Ansprüche 1 bis 4, wobei die Formulierung aus der Polymermatrix und dem Lamellengraphit besteht.

8. Verwendung nach einem der Ansprüche 1 bis 7, wobei die Polymermatrix mindestens ein Polymer umfasst, das aus der Gruppe ausgewählt ist, die aus einem duroplastischen Polymer, einem thermoplastischen Polymer und einem Elastomer besteht.

9. Verwendung nach Anspruch 8, wobei das duroplastische Polymer aus der Gruppe ausgewählt ist, die aus Polyepoxiden, ungesättigten Polyestern und Polyurethanen besteht.

10. Verwendung nach Anspruch 8, wobei das Elastomer aus der Gruppe ausgewählt ist, die aus Silikonen, Ethylen-Propylen-Copolymeren und Ethylen-Propylen-Dien-Terpolymeren besteht und vorzugsweise ein Silikon ist.

11. Verwendung nach Anspruch 8, wobei das thermoplastische Polymer aus der Gruppe ausgewählt ist, die aus linearen Polyestern, Polyamiden, Polycarbonaten, Ethylen-Vinylacetat-Copolymeren, Polyacetalen und Polyimiden besteht.

12. Verwendung nach einem der Ansprüche 1 bis 11 für ein Substrat einer elektronischen Komponente, für die Kapselung einer elektronischen Komponente, für die Kapselung von Verbindungs- oder Ausgangskabeln, als dielektrisches Material einer elektrischen Vorrichtung oder als Varistor.

13. Verwendung von Lamellengraphit, der eine spezifische, nach dem BET-Verfahren gemessene Oberfläche von 300 m²/g oder mehr in einem Volumenanteil von 5 Vol.-% oder weniger aufweist, als einziger Füllstoff oder als volumenmäßig mehrheitlicher Füllstoff eines Gemisches von Füllstoffen, das einem Material einen nichtlinearen elektrischen Widerstand verleiht, in einer Polymermatrix zur Herstellung eines Materials zur Verteilung des elektrischen Felds.

## Claims

1. Use of a formulation comprising a polymeric matrix and a filler or mixture of fillers conferring on a material a non-linear electrical resistance, for the manufacture of an electrical-field distribution material, **characterised in that** this filler or mixture of fillers is homogeneously dispersed in the polymeric matrix and **in that** the formulation comprises lamellar graphite as a single filler or as a volume majority filler of said mixture, the lamellar graphite having a specific surface area, measured according to the BET method, greater than or equal to 300 m²/g and the volume proportion of lamellar graphite, in the formulation, being less than or equal to 5% vol.

2. Use according to claim 1, wherein the lamellar graphite is in the form of particles formed by a stack of at least ten graphene sheets.

3. Use according to claim 1 or 2, wherein the lamellar graphite has a specific surface area, measured according to the BET method, of between 300 m²/g and 1000 m²/g and, preferably, between 500 m²/g and 800 m²/g,

4. Use according to any one of claims 1 to 3, wherein the volume proportion of lamellar graphite, in the formulation, is between 0.5 vol% and 4 vol% and, preferentially, between 1 vol% and 3 vol%.

5. Use according to any one of claims 1 to 4, wherein the filler(s) of said mixture other than lamellar graphite are selected from zinc oxide, titanium dioxide, silicon carbide and tin dioxide.

6. Use according to any one of claims 1 to 5, wherein the formulation further comprises one or more fillers other than the filler(s) of said mixture, for example silicon dioxide, a metal oxide and/or an electrically conductive carbon filler.

7. Use according to any one of claims 1 to 4, wherein the formulation consists of the polymeric matrix and the lamellar graphite.

8. Use according to any one of claims 1 to 7, wherein the polymeric matrix comprises at least one polymer selected from the group consisting of a thermosetting polymer, a thermoplastic polymer, and an elastomer.

9. Use according to claim 8, wherein the thermosetting polymer is selected from the group consisting of polyepoxides, unsaturated polyesters, and polyurethanes.

10. Use according to claim 8, wherein the elastomer is selected from the group consisting of silicones, ethylene-propylene copolymers, and ethylene-propylene-diene terpolymers and is preferably a silicone.

11. Use according to claim 8, wherein the thermoplastic polymer is selected from the group consisting of linear polyesters, polyamides, polycarbonates, ethylene-vinyl acetate copolymers, polyacetals, and polyimides.

12. Use according to any one of claims 1 to 11 for an electronic component substrate, for encapsulation of an electronic component, for encapsulation of cable connections or outlets, as a dielectric material of an electrical device or as a varistor.

13. Use of lamellar graphite having a specific surface area, measured according to the BET method, greater than or equal to 300 m²/g in a volume proportion less than or equal to 5 vol%, as a single filler or as a volume majority filler of a mixture of fillers conferring on a material a non-linear electrical resistance, in a polymeric matrix for the manufacture of an electrical-field distribution material.
